# EUROPEAN PATENT APPLICATION

(11) **EP 4 813 688 A1**
(43) Date of publication of application: **30.09.2026**
(21) Application number: 26154088.4
(22) Date of filing: 26.01.2026
(51) Int. Cl.: B60K 1/04, B60K 11/00

(54) **VEHICLE REAR STRUCTURE**

(30) Priority: 26.03.2025 JP 2025052168
(71) Applicant: Toyota Jidosha Kabushiki Kaisha, Toyota-shi, Aichi-ken 471-8571 (JP)
(72) Inventor: KAWAMOTO, Naoya, Toyota-shi, 471-8571 (JP)
(74) Representative: J A Kemp LLP

(57) **Abstract**

A smoke exhaust valve is provided at a rear end of a storage battery frame in a vehicle front-rear direction in plan view of a vehicle, and is disposed inward of a pair of rear wheels in a vehicle width direction. Therefore, the smoke exhaust valve is disposed inward of the rear wheels in the vehicle width direction, and accordingly the smoke exhaust valve and the rear wheels are not disposed on straight lines along the vehicle front-rear direction. Thus, in the event of a vehicle rear collision, input of a collision load from the rear wheels to the smoke exhaust valve can be suppressed.

## Description

### BACKGROUND OF THE INVENTION

### 1. Field of the Invention

The present invention relates to a vehicle rear structure.

### 2. Description of Related Art

Japanese Unexamined Patent Application Publication No. 2023-047012 (JP 2023-047012 A) describes a battery pack including a case, a battery cell provided inside the case, a ventilation member provided on a side wall of the case via a seal to adjust the pressure inside the case, and a pressure release valve provided on an upper wall of the case to release the pressure out of the case when the pressure inside the case abruptly increases. Japanese Patent No. 4917307 (JP 4917307 B) also discloses a battery pack.

### SUMMARY OF THE INVENTION

In the above related art, the pressure release valve is provided at the front end of the case on an upper cover that constitutes the upper part of the case. When the pressure release valve (hereinafter referred to as "smoke exhaust valve") is provided at the rear end of the case, it is necessary to protect the smoke exhaust valve against a rear-end collision of the vehicle (hereinafter referred to as "vehicle rear collision").

In view of the above fact, an object of the present invention is to provide a vehicle rear structure that can reduce a collision load input to a smoke exhaust valve in the event of a vehicle rear collision.

A vehicle rear structure according to a first aspect includes: a frame that supports a battery case mounted on a vehicle; a pair of rear wheels provided rearward of the frame in the vehicle on both outer sides in a vehicle width direction of the vehicle; and a smoke exhaust valve that is provided at a rear end of the battery case in a vehicle front-rear direction inside the frame in plan view of the vehicle, disposed inward of the rear wheels in the vehicle width direction, and configured to discharge exhaust smoke generated inside the battery case.

The vehicle rear structure according to the first aspect includes the frame, the rear wheels, and the smoke exhaust valve. The frame supports the battery case mounted on the lower part of the vehicle, and the rear wheels are provided rearward of the frame in the vehicle on both the outer sides in the vehicle width direction of the vehicle. The smoke exhaust valve is provided at the rear end of the frame in the vehicle front-rear direction in plan view of the vehicle, disposed inward of the rear wheels in the vehicle width direction, and configured to discharge exhaust smoke generated inside the battery case.

In the present aspect, the smoke exhaust valve is disposed inward of the rear wheels in the vehicle width direction, and accordingly the smoke exhaust valve and the rear wheels are not disposed on straight lines along the vehicle front-rear direction. Thus, in the present aspect, in the event of a vehicle rear collision, input of a collision load from the rear wheels to the smoke exhaust valve can be suppressed.

In a vehicle rear structure according to a second aspect, in the vehicle rear structure according to the first aspect, the smoke exhaust valve is provided, in the vehicle front-rear direction, at a rear end of a lower case that constitutes a lower part of the battery case and houses a battery module, and is provided above a lower surface of the lower case.

In the vehicle rear structure according to the second aspect, the smoke exhaust valve is provided, in the vehicle front-rear direction, at the rear end of the lower case that constitutes the lower part of the battery case and houses the battery module, and is provided above the lower surface of the lower case. Thus, in the present aspect, it is possible to discharge the exhaust smoke to the vehicle lower side. For example, compared to the case where the exhaust smoke is discharged along a horizontal direction, it is possible to suppress the influence of heat etc. caused by the exhaust smoke on the members around the smoke exhaust valve.

As described above, the vehicle rear structure according to the present invention can reduce the collision load input to the smoke exhaust valve in the event of the vehicle rear collision.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic exploded perspective view showing a configuration of a vehicle to which a vehicle rear structure according to an embodiment is applied;
FIG. 2 is a schematic bottom view showing a rear of the vehicle to which the vehicle rear structure according to the embodiment is applied; and
FIG. 3 is a schematic sectional view of the vehicle rear structure in FIG. 1 taken along a vehicle front-rear direction.

### DETAILED DESCRIPTION OF EMBODIMENTS

Hereinafter, a vehicle rear structure according to an embodiment of the present invention will be described with reference to the drawings. The same or similar signs denote identical or corresponding members in the drawings, and repetitive description will be omitted. When a plurality of identical or corresponding members is included in the drawing, some of them may be denoted with signs for clarity of the drawing.

Arrow FR shown in the drawings as appropriate indicates a front side in a vehicle front-rear direction, and arrow UP indicates an upper side in a vehicle up-down direction. Arrow RH indicates a right side in a vehicle width direction, and indicates an outer side in the vehicle width direction in the present embodiment. Hereinafter, the terms "front," "rear," "upper," "lower," "left," and "right" refer to front and rear in the vehicle front-rear direction, upper and lower in the vehicle up-down direction, and left and right in the vehicle right-left direction (vehicle width direction), respectively, unless otherwise specified.

### Configuration of Vehicle Rear Structure

First, a configuration of a vehicle to which the vehicle rear structure according to the present embodiment is applied will be described.

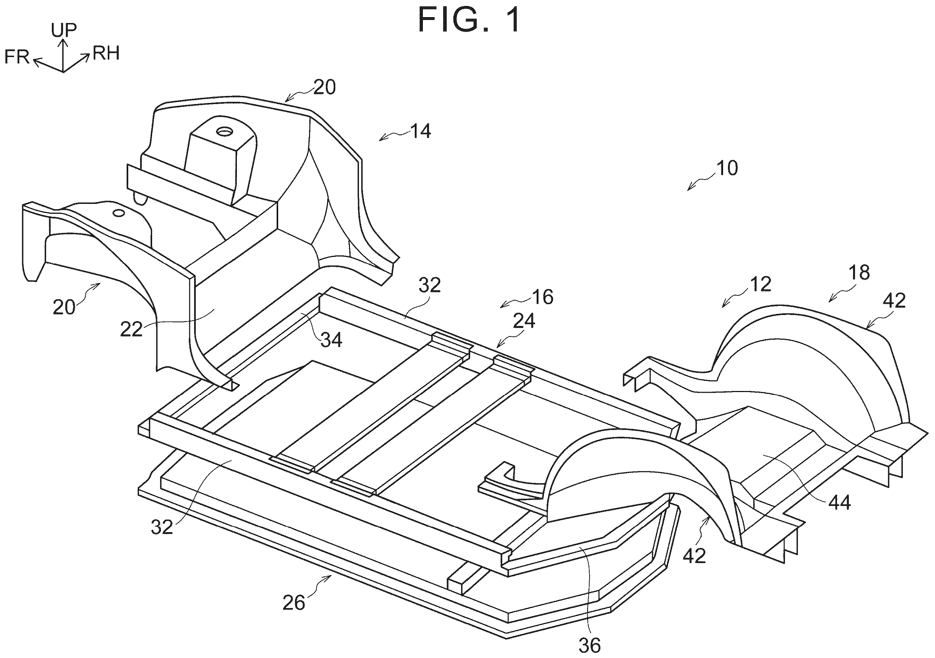

FIG. 1 is an exploded perspective view of a vehicle 10 to which a vehicle rear structure 12 according to the present embodiment is applied. In the present embodiment, the vehicle 10 is divided into a vehicle front portion (hereinafter referred to as "front module") 14, a vehicle center portion (hereinafter referred to as "center module") 16, and a vehicle rear portion (hereinafter referred to as "rear module") 18.

The front module 14 includes, for example, a pair of right and left wheel arches 20 that can house wheels (not shown), and a cross member 22 that connects the rear ends of the right and left wheel arches 20 in the vehicle width direction. The wheel arches 20 and the cross member 22 are integrally molded (integrated) by die casting using an aluminum alloy, a magnesium alloy, etc. as the material.

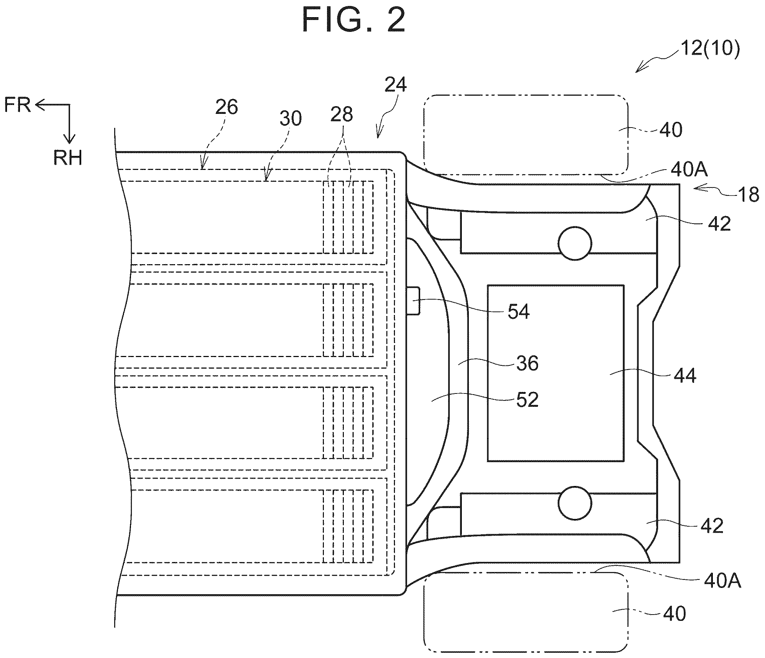

The center module 16 includes a storage battery frame (frame) 24 and a storage battery pack (battery case) 26. The storage battery pack 26 houses a plurality of storage battery modules (battery modules) 30 (see FIG. 2) each including a plurality of storage battery cells 28 (see FIG. 2). The storage battery pack 26 is made of a light metal such as an aluminum alloy, has a rectangular plate shape in plan view with its longitudinal direction corresponding to the vehicle front-rear direction, and is supported by the storage battery frame 24.

The storage battery frame 24 has, for example, a substantially rectangular frame shape in plan view with its longitudinal direction corresponding to the vehicle front-rear direction, and is integrally formed (integrated) by including a pair of right and left side frame portions (hereinafter referred to as "rockers") 32 extending in the vehicle front-rear direction on both outer sides of the storage battery pack 26 in the vehicle width direction, a front cross portion 34 connecting the front ends of the right and left rockers 32, and a rear cross portion 36 connecting the rear ends of the right and left rockers 32.

The rear module 18 includes a pair of right and left wheel arches 42 that is disposed on the outer sides in the vehicle width direction and can house rear wheels 40 (see FIG. 2), and a support portion 44 that connects the right and left wheel arches 42 in the vehicle width direction and can support a rear seat (not shown). Similarly to the front module 14, the wheel arches 42 and the support portion 44 are integrally molded by die casting using an aluminum alloy, a magnesium alloy, etc. as the material.

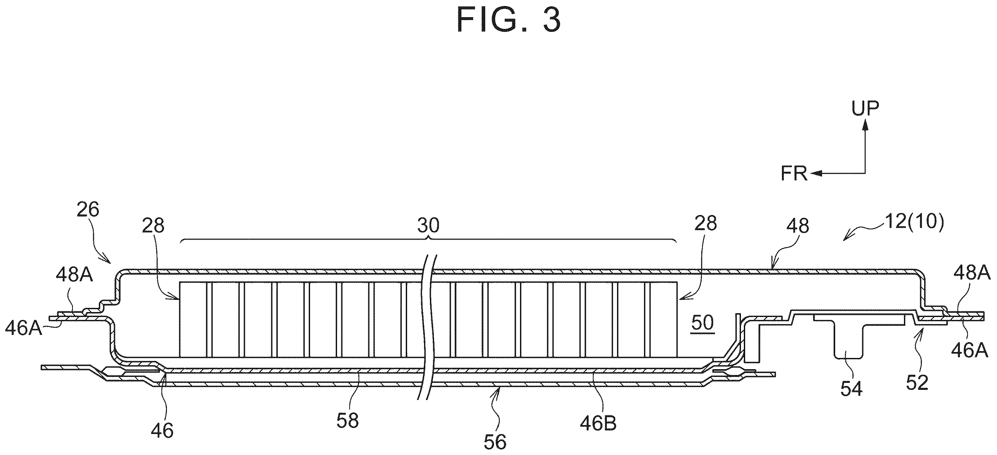

As shown in FIG. 3, the storage battery pack 26 includes a lower case 46 and an upper cover 48. The lower case 46 has a box-shaped housing portion 50 that can house the storage battery modules 30. The upper side of the lower case 46 is open, and a flange portion 46A projects from the peripheral edge of the lower case 46 to the outside of the housing portion 50. The upper cover 48 is a lid-shaped member that closes the upper side of the lower case 46, includes the housing portion 50 in combination with the lower case 46, and has the same configuration as the lower case 46. A flange portion 48A projects from the peripheral edge of the upper cover 48 to the outside of the housing portion 50. The flange portion 48A can be mated with and joined to the flange portion 46A formed on the lower case 46.

As shown in FIG. 3, at the rear end of the lower case 46, the area of the flange portion 46A is larger than the area of the flange portion 48A of the upper cover 48, and a connector block 52 is provided on the rear end side of the lower case 46. A smoke exhaust valve 54 that can communicate with the housing portion 50 is provided on the outer side of the connector block 52 in the vehicle width direction. That is, in the present embodiment, the smoke exhaust valve 54 is provided above a lower surface 46B of the lower case 46.

In the present embodiment, a common panel 56 extending in the vehicle front-rear direction and in the vehicle width direction is provided below the storage battery pack 26. The common panel 56 is a metal plate such as an aluminum alloy plate or a steel plate. In the present embodiment, the lower side of the storage battery pack 26 is covered by the common panel 56, and the storage battery modules 30 are therefore protected from foreign objects on a road etc. by the common panel 56.

The storage battery module 30 includes the storage battery cells 28 arranged along the vehicle front-rear direction. The storage battery modules 30 are arranged along the vehicle width direction. When gas containing smoke (hereinafter, this gas will be referred to simply as "smoke") is generated in any storage battery cell 28 for some reason, the smoke is discharged from the central position in the vehicle width direction on the lower surface of the storage battery cell 28.

Therefore, the lower case 46 includes a downward projecting portion 58 that projects downward and is provided along the vehicle front-rear direction, and the smoke discharged from the storage battery cell 28 is guided to the vehicle rear side through the downward projecting portion 58. The downward projecting portion 58 can communicate with the smoke exhaust valve 54 provided at the rear end of the lower case 46, and the smoke discharged from the storage battery cell 28 through the downward projecting portion 58 can be discharged out of the vehicle via the smoke exhaust valve 54.

The smoke exhaust valve 54 is opened, for example, when the internal pressure inside the downward projecting portion 58 is higher than the air pressure outside the downward projecting portion 58 by a predetermined value or more. That is, when the smoke flows into the downward projecting portion 58 and the internal pressure increases by the predetermined value or more, the smoke exhaust valve 54 is opened and the gas inside the downward projecting portion 58 is discharged to the outside.

In the present embodiment, as shown in FIG. 2, the smoke exhaust valve 54 is provided at the rear end of the storage battery frame 24 in the vehicle front-rear direction in plan view of the vehicle, and is disposed inward of the rear wheels 40 in the vehicle width direction. More specifically, in the present embodiment, the smoke exhaust valve 54 is provided inward, in the vehicle width direction, of inner surfaces 40A of the rear wheels 40 in the vehicle width direction. That is, in the present embodiment, the smoke exhaust valve 54 is not present on extension lines of the rear wheels 40 along the vehicle front-rear direction.

### Functions and Effects of Vehicle Rear Structure

Next, the functions and effects of the vehicle to which the vehicle rear structure according to the present embodiment is applied will be described.

In the present embodiment, as shown in FIG. 1, the vehicle 10 includes the front module 14 that constitutes the vehicle front portion, and the rear module 18 that constitutes the vehicle rear portion. The front module 14 includes the right and left wheel arches 20 and the cross member 22 that connects the right and left wheel arches 20 in the vehicle width direction. The right and left wheel arches 20 and the cross member 22 are integrally molded by die casting.

The rear module 18 includes the right and left wheel arches 42 and the support portion 44 that connects the right and left wheel arches 42 in the vehicle width direction. The right and left wheel arches 42 and the support portion 44 are integrally molded by die casting.

In the present embodiment, the front module 14 and the rear module 18 are each integrally molded by die casting, and accordingly each have high rigidity compared to the case where a plurality of components is molded separately and coupled together.

By coupling the cross member 22 of the front module 14 to the front cross portion of the storage battery frame 24 and coupling the support portion 44 of the rear module 18 to the rear cross portion 36 of the storage battery frame 24, the rigidity of the storage battery frame 24 can be improved against a broadside collision of the vehicle 10 (hereinafter referred to as "side collision").

In the present embodiment, the smoke exhaust valve 54 is provided at the rear end of the storage battery frame 24 in the vehicle front-rear direction in plan view of the vehicle, and is disposed inward of the rear wheels 40 in the vehicle width direction.

In the present embodiment, the smoke exhaust valve 54 is disposed inward of the rear wheels 40 in the vehicle width direction, and accordingly the smoke exhaust valve 54 and the rear wheels 40 are not disposed on straight lines along the vehicle front-rear direction. Thus, in the present embodiment, in the event of a rear collision of the vehicle 10, input of a collision load from the rear wheels 40 to the smoke exhaust valve 54 can be suppressed.

A rear suspension member (not shown) is provided between the rear wheels 40. Therefore, the rear suspension member is provided on the vehicle rear side of the smoke exhaust valve 54. Thus, in the present embodiment, in the event of a rear collision of the vehicle 10, the smoke exhaust valve 54 can be protected also by the rear suspension member.

In the present embodiment, the smoke exhaust valve 54 is provided above the lower surface 46B of the lower case 46 that constitutes the lower part of the storage battery pack 26. Thus, in the present embodiment, it is possible to discharge the exhaust smoke to the vehicle lower side. For example, compared to the case where the exhaust smoke is discharged along a horizontal direction, it is possible to suppress the influence of heat etc. caused by the exhaust smoke on the members around the smoke exhaust valve 54.

Although the embodiment of the present invention has been described above, the present invention is not limited to such an embodiment. The embodiment may be combined with various modifications as appropriate. The present invention may be carried out in various forms without departing from the spirit of the present invention.

## Claims

1. A vehicle rear structure comprising:
a frame that supports a battery case mounted on a vehicle;
a pair of rear wheels provided rearward of the frame in the vehicle on both outer sides in a vehicle width direction of the vehicle; and
a smoke exhaust valve that is provided at a rear end of the battery case in a vehicle front-rear direction inside the frame in plan view of the vehicle, disposed inward of the rear wheels in the vehicle width direction, and configured to discharge exhaust smoke generated inside the battery case.

2. The vehicle rear structure according to claim 1, wherein the smoke exhaust valve is provided, in the vehicle front-rear direction, at a rear end of a lower case that constitutes a lower part of the battery case and houses a battery module, and is provided above a lower surface of the lower case.
